# EUROPÄISCHE PATENTSCHRIFT

(11) **EP 0 939 890 B1**
(45) Veröffentlichungstag und Bekanntmachung des Hinweises auf die Patenterteilung: **10.10.2001**
(21) Anmeldenummer: 97951788.5
(22) Anmeldetag: 19.11.1997
(51) Int. Cl.: G01M 17/007, G01M 15/00

(54) **GEHÄUSE MIT EINEM PRÜFGERÄT ODER MIT EINEM ANZEIGE- UND BEDIENTABLEAU EINES PRÜFGERÄTS**
HOUSING WITH A TESTING APPARATUS OR WITH AN INDICATOR AND CONTROL BOARD OF A TESTING APPARATUS
BOITIER ASSOCIE A UN APPAREIL DE CONTROLE OU A UN TABLEAU D'AFFICHAGE ET DE COMMANDE D'UN APPAREIL DE CONTROLE

(30) Priorität: 21.11.1996 DE 29620236 U
(43) Veröffentlichungstag der Anmeldung: 08.09.1999
(73) Patentinhaber: DSA Daten- Und Systemtechnik GmbH, 52076 Aachen (DE)
(72) Erfinder: MANSFELD, Jürgen, D-52076 Aachen (DE); SCHULZ, Eckhard, D-52076 Aachen (DE)
(74) Vertreter: König, Werner, Dipl.-Ing.
(86) Internationale Anmeldenummer: DE9702721
(87) Internationale Veröffentlichungsnummer: WO9822789

(56) Entgegenhaltungen:
- WO-A-97/19833
- US-A- 4 113 980
- PATENT ABSTRACTS OF JAPAN vol. 009, no. 010 (E-290), 17.Januar 1985 & JP 59 160339 A (AISHIN SEIKI KK;OTHERS: 01), 11.September 1984,

## Beschreibung

Die Erfindung betrifft ein Gehäuse mit einem Prüfgerät oder mit einem Anzeige- und Bedientableau eines Prüfgeräts für die On-Board-Diagnose im Cockpit-Bereich von Kraftfahrzeugen.

Moderne Kraftfahrzeuge werden für die Diagnose verschiedener Funktionseinheiten sowie zur Vornahme von Einstellarbeiten mit Möglichkeiten zur Datenabfrage ausgerüstet. Über eine mehrpolige Steckverbindung wird eine Verbindung mit einem Prüfgerät hergestellt und es können dann verschiedene Motordaten, Daten über die Funktion der Antriebs- und Bremsanlage und andere vom Kraftfahrzeug selber bereitgestellte Werte abgerufen werden.

Derartige Prüfgeräte wie auch andere Prüfgeräte mit extern gemessenen Daten, wie z.B. Abgasprüfgeräte, werden zum Teil als Handgeräte bereitgestellt oder sie besitzen ein separates Anzeige- und Bedientableau, das in der Hand gehalten werden kann. Es besteht nämlich die Notwendigkeit, bei der Benutzung der Prüfgeräte beim Hersteller oder im Werkstattbetrieb bei einer On-Bord-Diagnose den Platz des Fahrers einzunehmen, um die Steuer- und Bedienelemente des Kraftfahrzeuges überprüfen bzw. um, z.B. auf einem Rollenprüfstand, das Verhalten des Kraftfahrzeuges bei verschiedenen Betriebszuständen testen zu können und dabei das Anzeige- und Bedientableau zur Hand zu haben. Um das Anzeige- und Bedienfeld des Diagnosegerätes bzw. ein entsprechendes Tableau im Blickfeld, andererseits aber die Hände zur Bedienung des Kraftfahrzeuges frei zu haben, ist es üblich, das Gerät während des Tests auf der Mittelkonsole des Lenkrades abzulegen.

Die meisten modernen Kraftfahrzeuge werden indessen auch mit einem Airbag, mindestens auf der Fahrerseite, ausgerüstet. Der Fahrerairbag befindet sich in der Lenkradsäule. Kommt es nun während einer On-Bord-Diagnose zu einem unbeabsichtigten Auslösen des Airbags, was in einer Testphase, während der an dem Fahrzeug manipuliert wird oder das Fahrzeug Erschütterungen erfährt, unter Umständen passieren kann, stellt das abgelegte Prüfgerät bzw. das Anzeige- und Bedientableau eine hochrangige Gefahr für die Bedienperson dar. Ein Auslösen des Airbags würde dazu führen, daß das Gerät mit hoher Beschleunigung auf die Bedienperson geschleudert würde und die Gefahr ernsthafter bzw. schwerster Verletzungen für die Bedienperson bestände.

Die US-A-4113980 zeigt ein entsprechendes Gehäuse am Lenkrad mit einem Klemmbügel.

Der Erfindung liegt die Aufgabe zugrunde, für ein Gerät der eingangs genannten Art eine Lösung anzugeben, mit der Unfälle und Gefährdungen des Bedienpersonals durch unbeabsichtigtes Auslösen eines Airbags während einer On-Bord-Diagnose sicher vermieden werden können.

Erfindungsgemäß wird die Aufgabe nach dem Anspruch 1, gelöst.

Das Prüfgerät bzw. das Anzeige- und Bedientableau wird mit der erfindungsgemäßen Befestigungseinrichtung so im Sichtbereich der Bedienperson angebracht, daß der oder die Airbag-bereiche freibleiben und eine Gefährdung bei unbeabsichtigtem Auslösen eines Airbags ausgeschlossen ist.

Dazu wird das Gehäuse so ausgeführt, daß die Befestigungseinrichtung sowie ggf. die Form des Gehäuses der vorgesehenen Befestigungsstelle unter Auslassung des oder der Airbag-Bereiche formschlüssig angepaßt ist.

Bevorzugt wirkt die Befestigungseinrichtung mit dem Lenkradkranz eines Lenkrades zusammen, wobei aus Platzgründen der obere oder der der Fahrzeugmitte zugewandte Teil des Lenkradkranzes des Lenkrades besonders geeignet sind.

Andere Stellen im Cockpit, z.B. die Befestigung an bzw. auf dem Armaturenbrett, sind ebenso geeignet, wobei durch geeigneten Formschluß, z.B. Eingriff in die Instrumentenabdeckung, ausgeschlossen werden muß, daß die Befestigung in einem Airbag-Bereich erfolgen kann.

In erfindungsgemäß bevorzugter Weise kann die Befestigungseinrichtung eine Klemmeinrichtung sein.

Sie kann so ausgebildet sein, daß sie eine den Lenkradkranz des Lenkrades aufnehmende, bogenförmige Aufnahmenut in der dem Lenkrad zugewandten Seite des Gehäuses bildet.

Die üblichen Lenkräder weisen eine nahezu gleiche form und nahezu gleichen Radius und Querschnitt auf, so daß die Aufnahmenut so bemessen werden kann, daß das Gehäuse des Prüfgeräts bzw. des Anzeige- und Bedientableaus auf eine Vielzahl von Lenkrädern verschiedener Kraftfahrzeughersteller aufgesteckt werden kann. Dadurch, daß die Aufnahmenut dem Radius des Lenkrades folgt, erfolgt eine flächige Auflage, die das Gehäuse kippsicher hält, auch wenn die Form der Aufnahmenut nicht ganz genau der Lenkradform entspricht. Wenn nötig können zusätzlich an den Lenkradkranz angreifende oder diesen übergreifende Klemmfedern oder mit lösbaren Rasterungen versehene Klemmstücke vorgesehen sein.

Die Form des Gehäuses kann so gestaltet sein, daß sie der Form eines Lenkrades angepaßt ist, also seiner Krümmung folgt. Insgesamt muß das Gerät jedoch so geformt sein, daß das Lenkrad bei seiner Befestigung nicht festgeklemmt wird, da das Lenkrad in der Lage sein muß, z.B. beim Testbetrieb auf einem Rollenprüfstand, kleine Lenkradbewegungen auszuführen.

Die Erfindung soll nachstehend anhand eines Ausführungsbeispiels näher erläutert werden. In den zugehörigen Zeichnungen zeigen
- Fig. 1: die erfindungsgemäße Befestigung eines Gehäuses eines Anzeige- und Bedientableaus an einem Lenkrad in Draufsicht,
- Fig. 2: die Darstellung nach Fig. 1 in Seitenansicht und
- Fig. 3: eine der Figur 2 ähnliche Darstellung mit abweichender Plazierung der Aufnahmenut.

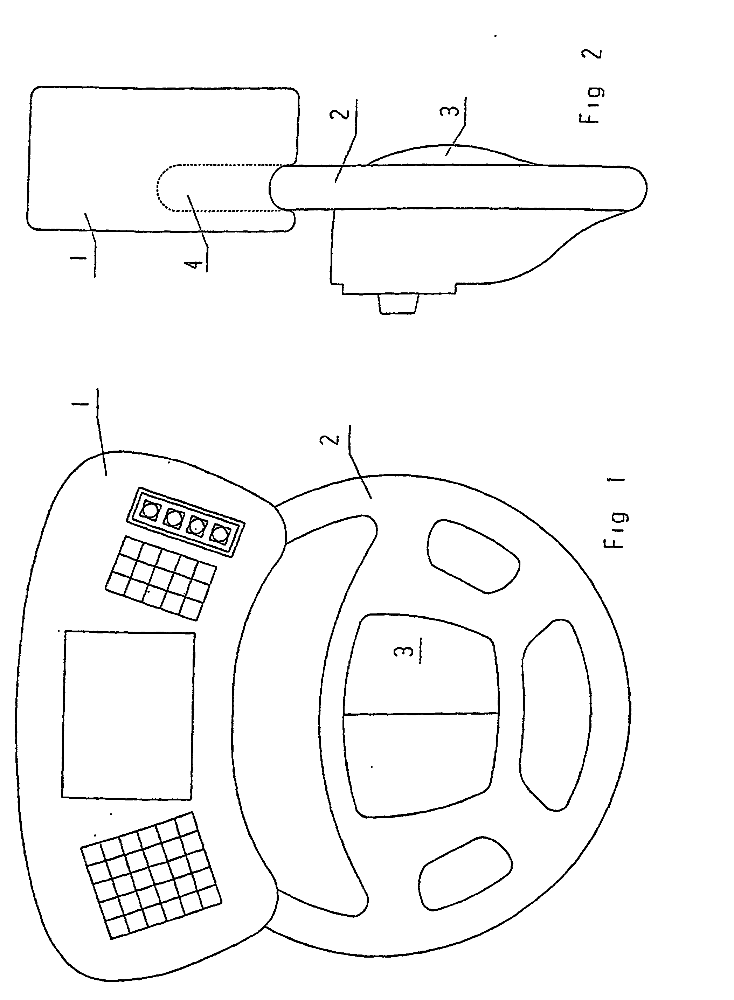

Das Gehäuse 1 eines Anzeige- und Bedientableaus, das ein angedeutetes zentrales LCD-Anzeigefeld sowie weitere spezielle Anzeigen und eine Bedientastatur aufweist, ist in Fig. 1 gezeigt. Seine Grundform ist insgesamt dem Radius eines Lenkrades 2 angepaßt. In einer Mittelkonsole 3 des Lenkrades 2 ist ein Airbag untergebracht.

Das Gehäuse 1 des Anzeige- und Bedientableaus ist an seiner Unterseite mit einer bogenförmigen Nut 4 versehen, deren Breite dem üblichen Durchmesser des Lenkradkranzes eines Lenkrades entspricht. Das Befestigen des Anzeige- und Bedientabieaus erfolgt durch einfaches Aufsetzen auf den oberen Lenkradkranz des Lenkrades 2 bis zum Anschlagen des Gehäuses 1 am Lenkradkranz. Infolge der Krümmung des Lenkrades 2 sowie der entsprechenden Krümmung der Nut 4 erfolgt eine flächige Befestigung, so daß das Anzeige- und Bedientableau kippsicher festsitzt.

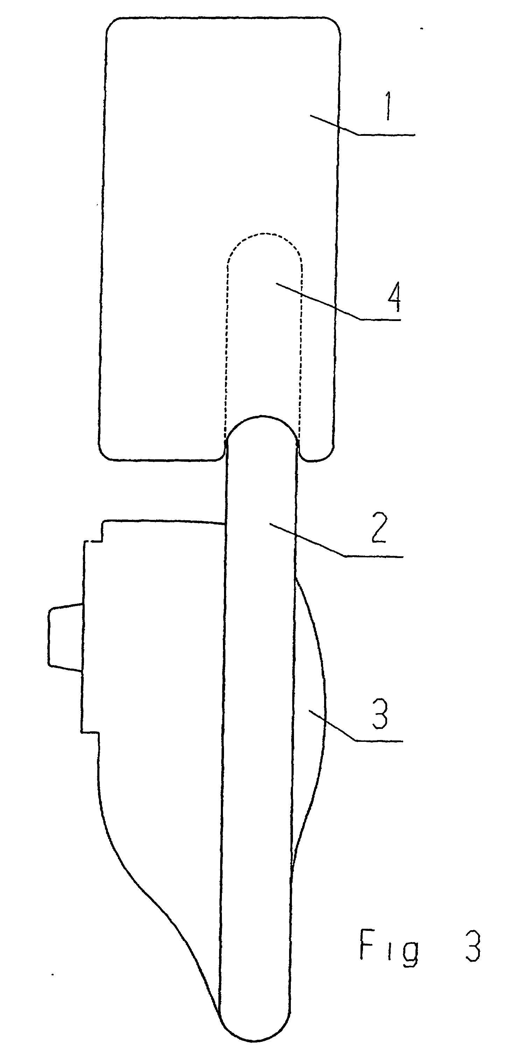

Bei der Ausführungsform nach Fig. 2 ist die bogenförmige Nut 4 im rückwärtigen Bereich des Gehäuses 1 vorgesehen, so daß sich der größere Teil des Gehäuses im aufgesetzten Zustand-aus der Fahrerposition betrachtet - vor dem Lenkrad 2 befindet. Bei der Ausführungsform nach Fig. 3 dagegen ist die bogenförmige Nut 4 im vorderen Bereich des Gehäuses 1 vorgesehen, so daß sich der größere Teil des Gehäuses im aufgesetzten Zustand - aus der Fahrerposition betrachtet - hinter dem Lenkrad 2 befindet.

Bei einem unbeabsichtigten Auslösen des Fahrerairbags kann sich dieser ungehindert entfalten. Eine Gefährdung der Bedienperson durch vom Airbag beschleunigte Teile ist somit ausgeschlossen.

## Patentansprüche

1. Gehäuse mit einem Prüfgerät oder mit einem Anzeige- und Bedientableau eines Prüfgeräts für die On-Board-Diagnose im Cockpit-Bereich von Kraftfahrzeugen, wobei das Gehäuse (1) mit einer Befestigungseinrichtung versehen ist, mit der es am Cockpit des Kraftfahrzeugs lösbar befestigt werden kann,
**dadurch gekennzeichnet,**
**dass** das Gehäuse und die Befestigungseinrichtung unter Auslassung des oder der Airbagbereiche(s) platzierbar sind und die Befestigungseinrichtung der vorgesehenen Befestigungsstelle am Cockpit formschlüssig angepasst ist.

2. Gehäuse nach Anspruch 1, **dadurch gekennzeichnet, dass** die Form des Gehäuses der vorgesehenen Befestigungsstelle am Cockpit formschlüssig angepasst ist

3. Gehäuse nach Anspruch 1 oder 2, **dadurch gekennzeichnet, daß** die Befestigungseinrichtung mit dem Lenkradkranz eines Lenkrades (2) zusammenwirkt.

4. Gehäuse nach Anspruch 3, **dadurch gekennzeichnet, daß** die Befestigungseinrichtung mit dem oberen Teil des Lenkradkranzes zusammenwirkt.

5. Gehäuse nach Anspruch 3, **dadurch gekennzeichnet, daß** die Befestigungseinrichtung mit dem der Fahrzeugmitte zugewandten Teil des Lenkradkranzes zusammenwirkt.

6. Gehäuse nach einem der vorhergehenden Ansprüche, **dadurch gekennzeichnet, daß** die Befestigungseinrichtung eine Klemmeinrichtung ist.

7. Gehäuse nach einem der vorhergehenden Ansprüche, **dadurch gekennzeichnet, daß** die Befestigungseinrichtung eine den Lenkradkranz des Lenkrades (2) aufnehmende, bogenförmige Aufnahmenut (4) in der dem Lenkrad (2) zugewandten Seite des Gehäuses (1) ist.

8. Gehäuse nach einem der Ansprüche 3 bis 7, **dadurch gekennzeichnet, daß** die Befestigungseinrichtung mit dem Lenkradkranz des Lenkrades (2) zusammenwirkende Klemmfedern aufweist.

9. Gehäuse nach einem der vorhergehenden Ansprüche, **dadurch gekennzeichnet, daß** die Form des Gehäuses (1) dem Radius des Lenkradkranzes folgt.

## Claims

1. Housing having a test set or having a display and control panel of a test set for on-board diagnosis in the driver's area of motor vehicles, the housing (1) being provided with an attachment device by means of which it can be attached, detachably, to the driver's area of the motor vehicle, **characterized in that** the housing and the attachment device can be located so as to leave free the airbag area or areas and the attachment device is matched to the shape of the intended attachment point in the driver's area.

2. Housing according to Claim 1, **characterized in that** the shape of the housing is matched to the shape of the intended attachment point, in the driver's area.

3. Housing according to Claim 1 or 2, **characterized in that** the attachment device interacts with the steering wheel rim of a steering wheel (2).

4. Housing according to Claim 3, **characterized in that** the attachment device interacts with the upper part of the steering wheel rim.

5. Housing according to Claim 3, **characterized in that** the attachment device interacts with the part of the steering wheel rim that faces the vehicle centre.

6. Housing according to one of the preceding claims, **characterized in that** the attachment device is a clamping device.

7. Housing according to one of the preceding claims, **characterized in that** the attachment device is a curved retaining groove (4), which holds the steering wheel rim of the steering wheel (2), in the side of the housing (1) that faces the steering wheel (2).

8. Housing according to one of Claims 3 to 7, **characterized in that** the attachment device has clamping springs which interact with the steering wheel rim of the steering wheel (2).

9. Housing according to one of the preceding claims, **characterized in that** the shape of the housing (1) follows the radius of the steering wheel rim.

## Revendications

1. Boîtier avec un appareil de contrôle ou un tableau d'affichage et de commande d'un appareil de contrôle pour le diagnostic embarqué dans la région de l'habitacle de véhicules à moteur, le boîtier (1) étant doté d'un dispositif de fixation par lequel il peut être fixé de manière libérable sur l'habitacle du véhicule,
**caractérisé en ce que**
le boîtier et le dispositif de fixation peuvent être placés en laissant libre la ou les régions du sac gonflable de sécurité et le dispositif de fixation est adapté en correspondance géométrique aux points de fixation prévus dans l'habitacle.

2. Boîtier selon la revendication 1, **caractérisé en ce que** la forme du boîtier est adaptée en correspondance géométrique à celle de l'emplacement de fixation prévu dans l'habitacle.

3. Boîtier selon la revendication 1 ou 2, **caractérisé en ce que** le dispositif de fixation coopère avec la couronne d'un volant (2).

4. Boîtier selon la revendication 3, **caractérisé en ce que** le dispositif de fixation coopère avec la partie supérieure de la couronne du volant.

5. Boîtier selon la revendication 3, **caractérisé en ce que** le dispositif de fixation coopère avec la partie de la couronne du volant qui est tournée vers le milieu du véhicule.

6. Boîtier selon l'une des revendications précédentes, **caractérisé en ce que** le dispositif de fixation est un dispositif à serrage.

7. Boîtier selon l'une des revendications précédentes, **caractérisé en ce que** le dispositif de fixation est une rainure de réception (4) en forme d'arc de cercle recevant la couronne du volant (2) et ménagée dans le côté du boîtier (1) qui est tourné vers le volant (2).

8. Boîtier selon l'une des revendications 3 à 7, **caractérisé en ce que** le dispositif de fixation présente des ressorts de serrage coopérant avec la couronne du volant (2).

9. Boîtier selon l'une des revendications précédentes, **caractérisé en ce que** la forme du boîtier (1) suit le rayon de la couronne du volant.
